# EUROPEAN PATENT APPLICATION

(11) **EP 0 733 821 A1**
(43) Date of publication of application: **25.09.1996**
(21) Application number: 96301929.4
(22) Date of filing: 21.03.1996
(51) Int. Cl.: F16F 9/24, F16F 9/36

(54) **Shock absorber**

(30) Priority: 23.03.1995 IS 113106
(71) Applicant: STATE OF ISRAEL MINISTRY OF DEFENCE RAFAEL ARMAMENT DEVELOPMENT AUTHORITY, Haifa 31 021 (IL)
(72) Inventor: Yehezkely, Oded, Kiryat, Tivon (IL)
(74) Representative: West, Alan Harry

(57) **Abstract**

A shock absorber comprises two component elements (10,15) which together define a chamber (11) in which a liquid is housed, said elements being relatively displaceable under shock to restrict said chamber, and sealing means (14) for sealing said chamber, said means being yieldable under shock to produce a narrow passage between said two elements, whereby the liquid, forced out of said chamber when the same is restricted, seeps out of the device through said passage and absorbs, in such a seepage, a high amount of energy.

## Description

This invention relates to shock absorbers, more specifically to devices for dissipating by hydraulic means the energy developed in a shock.

Shock absorption by dissipation of energy developed in the shock is a very common problem in engineering and a great number of devices have been developed for such a purpose. Certain features are requested of shock-absorbing devices, among them simplicity of structure, safety of operation, capability of absorbing large amounts of energy in a small space, and low cost.

It is the purpose of this invention to provide such a device that possesses all the desirable features to a very high degree. It is another purpose of this invention to provide such a device in which the ratio of the energy absorbed to the size of the device is extremely high. The unique features and advantages of the shock-absorbing device according to the invention will become apparent as the description proceeds.

The shock absorber according to the invention is characterized in that it comprises two component elements which together define a chamber in which a liquid is housed, said elements being relatively displaceable under shock to restrict said chamber, and sealing means for sealing said chamber, said means being yieldable under shock to produce a narrow passage between said two elements, whereby the liquid, forced out of said chamber when the same is restricted, seeps out of the device through said passage and absorbs, in such a seepage, a high amount of energy. According to an aspect of the invention, the device houses, besides said liquid in said chamber, an amount of compressible fluid, preferably air, whereby a limited relative displacement of said two component elements of the device occurs under shock before said seepage of said liquid begins. said sealing means being yieldable during said displacement to produce said narrow passage between said two component elements. In a preferred form of the invention, the device further comprises spacing means, e.g. an elongated spacer, cooperating with said component elements for maintaining the same in predetermined positioned relationship. such means yieldable under shock to permit relative displacement of said two elements.

More particularly, one of the two component elements is hollow and defines the chamber which holds therein the liquid, and the second element engages the opening of the first and is slidable therein, whereby the two elements may be designated, and will be designated hereinafter. as "cylinder" and "piston". The sealing means may be a gasket, preferably of a relatively yieldable metal, provided between the cylinder and the piston, normally to retain the liquid in said cylinder, said gasket being yieldable under shock to allow said piston to slide into said cylinder.

In a preferred form of the invention, the piston comprises two longitudinally successive portions of different diameter. the portion of larger diameter normally engaging the cylinder and the displacement of the piston into the cylinder under shock creating a passage between the cavity of the cylinder and the portion of the piston of smaller diameter. through which passage the liquid contained in the cylinder may flow, whereby to absorb the energy of the shock. Said passage is therefore annular, in said form of the invention. A secondary chamber is provided in the piston and the piston is so spaced from the cylinder that said secondary chamber is filled with a gas, generally air, whereby limited relative displacement of piston and cylinder is permitted by the compressibility of said gas.

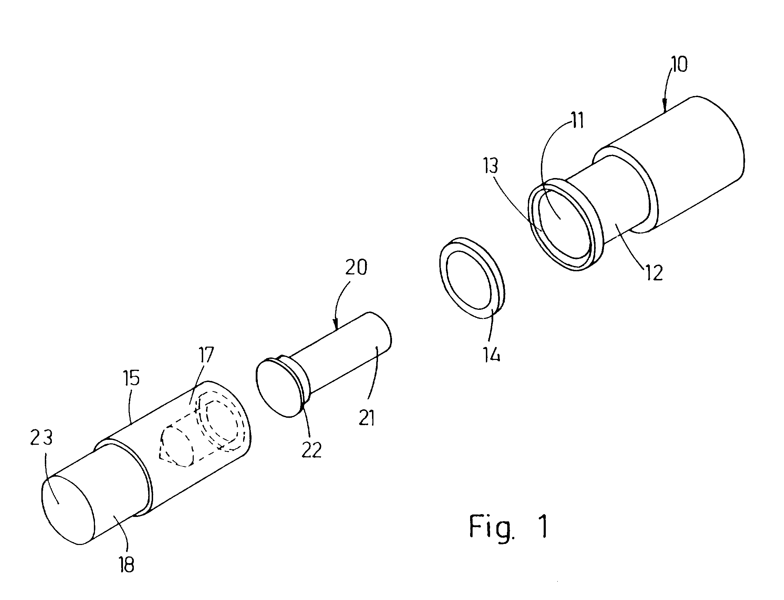

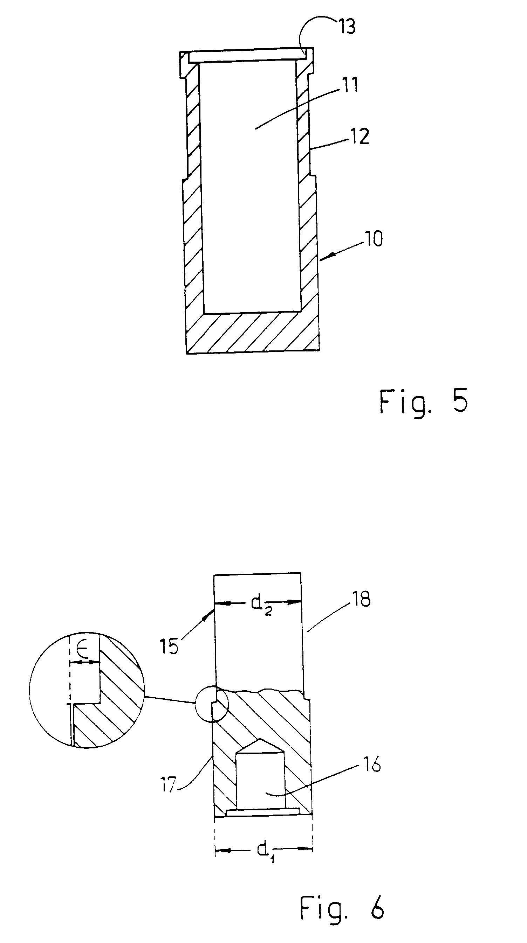

In the drawings:
- Fig. 1 is an exploded view of the device before assembly, seen in perspective;
- Fig. 2 is a lateral view of the assembled device, before a shock has been produced;
- Fig. 3 is an axial cross-section of Fig. 2:
- Fig. 4 is an axial cross-section similar to Fig. 3. but showing the device after a shock has been produced;
- Fig. 5 is an axial cross-section of the cylinder; and
- Fig. 6 is an axial cross-section of the piston
As seen in Fig. 1, the device comprises, in a preferred embodiment thereof, a cylinder 10, which has a cylindrical cavity or "main chamber" 11. In this embodiment, cylinder 10, as shown particularly in Fig. 5, has a restricted portion 12 for allowing wall flexibility. At its open end, cylinder 10 has a seat 13 for a gasket 14. Piston 15 has a first portion 17, which is inserted into the cylinder when the device is mounted, which has a diameter d₁ and a second portion 18 which has a diameter d₂. The difference between those two diameters is greatly exaggerated in the drawings, for purposes of illustration, and is in fact very small. For instance, in a device which is intended to absorb an energy of 20-30 Newton.meter, d₁ may be 7.95 mm and d₂ 7.90 mm. As seen in Fig. 5, piston 15 may preferably be provided with a small cavity 16, hereinafter called "secondary chamber". the purpose of which will appear hereinafter. This embodiment of the device further comprises a spacer 20, preferably comprising a cylindrical body 21 and a head 22. Gasket 14 is made of a relatively yieldable material. For example. if the cylinder and the piston are made of steel. the gasket is made of aluminum and the spacer is made of aluminum or other weak material.

Then the device is mounted, the cavity 11 of cylinder 10 is filled with oil or other convenient liquid . Spacer 20 is introduced with its head 21 into secondary chamber 16 of piston 15. The piston with the spacer is rhen introduced into the cylinder. with its portion 17 of larger diameter engaging the cavity of the cylinder. Spacer 20 will determine how far the piston goes into the cylinder. In general, it will prevent the oil from entering secondary chamber 16, so that a small amount of air will remain trapped in said chamber.

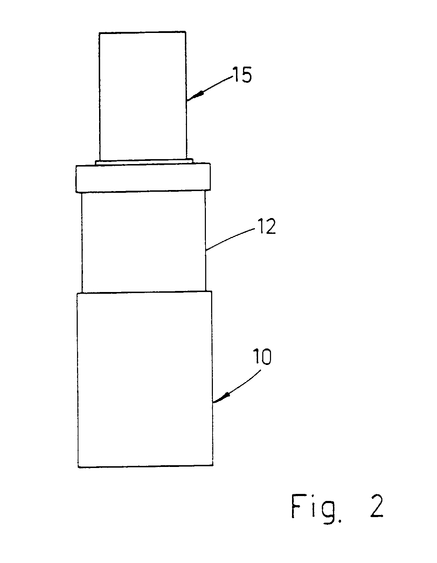

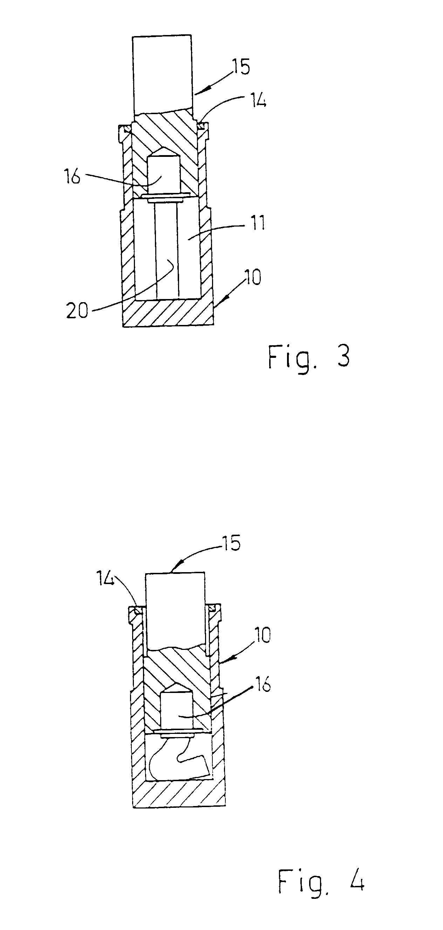

Gasket 14 is seated in seat 13 and is then crimped in place and seals the device in the condition shown in Figs. 2 and 3. When the device is subjected to a shock, a force is exerted on the free end 23 of the piston and tends to force it more deeply within the cylinder. Under the impact of this force, spacer 20 will yield and become deformed or broken, and will not prevent displacement of the piston inside the cylinder. Said displacement is also made possible by the fact that a certain amount of air is trapped in secondary chamber 16 and its compressibility permits some displacement of the piston inside the cylinder. as the shock causes head 22 of spacer 20 to break down, and, consequently, cavity 16 becomes accessible to the oil. at the transient period of time following the impact. Gasket 14 also yields. The piston slides inside the cylinder until its portion 17 of larger diameter is entirely inside the cylinder itself and its portion 18 of smaller diameter faces the opening of the cylinder and the gasket. A passage is thus created between cylinder and the gasket on the one hand and the piston on the other and the oil can seep through it. This passage is very narrow, eg., as has been seen, in the order of tens to hundredths of a millimeter depending on the viscosity of the oil), and therefore the energy absorbed in the flow of the oil through it is very high. In an embodiment such as the one described, 20-30 Newton.meter are absorbed by a device the overal volume of which is less than 3 cc. Because of the brief duration of the shock phenomenon, it is not exactly known what is the pressure developed inside the main chamber of the device, but it is believed to be in the order of 5000-15000 atmospheres. The device is accordingly designed by skilled persons to withstand such pressures.

Fig. 6 reflects the ratio between the dimensions of the gaps existing between the cylinder and the two portion of the piston, having diameters d1 and d2 (d1>d2). ε designates the dimension of the passage created between the cylinder and the portion having the d2 diameter, ε being in the order of hundredths to tens of a millimeter, as stated above. It can be seen in Fig. 6 that said passage is greater than the gap existing between the cylinder and the wide portion of the piston. The narrow gap allows the oil to reach and flow in the passage having dimension ε after the impact and after the gasket 14 has yielded and ceased to seal said last mentioned passage.

While an embodiment of the invention has been described by way of illustration. it will be understood that the invention can be carried into practice with many modifications, variations and adaptations, without departing from its spirit or exceeding the scope of the claims. For example, the device has been described as cylindrical and this is the most effective shape, however a different one could be adopted. Likewise, the passage for the seepage of the liquid under shock need not be annular and might consist in one or more orifices; the desired positioned relationship of the two component elements might be obtained by means other that an elongated spacer; sealing means other than an annular gasket might be provided; and so on.

## Claims

1. A shock absorber, characterized in that it comprises two component elements (10,15) which together define a chamber (11,16) in which a liquid is housed, said elements being relatively displaceable under shock to restrict said chamber, and sealing means (14) for sealing said chamber, said means being yieldable under shock to produce a narrow passage between said two elements, whereby the liquid, forced out of said chamber (11) when the same is restricted, seeps out of the device through said passage and absorbs, in such a seepage, a high amount of energy.

2. A shock absorber according to claim 1, which houses, besides said liquid in said chamber (16), an amount of compressible fluid, preferably air, whereby a limited relative displacement of said two component elements (10,15) of the device occurs under shock before said seepage of said liquid begins, and wherein said sealing means (14) are yieldable during said displacement to produce said narrow passage between said two component elements.

3. A shock absorber according to claim 1 or claim 2, further comprising spacing means (20) cooperating with said component elements (10,15) for maintaining the same in predetermined positioned relationship, the spacing means (20) being yieldable under shock to permit relative displacement of said two elements.

4. A shock absorber according to any one of claims 1 to 3, wherein one of the two component elements is a hollow cylinder (10) and defines the chamber (11) which holds therein the liquid, and the second element is a piston (15) which engages the opening of the cylinder (10) and is slidable therein.

5. A shock absorber according to claim 4, wherein the sealing means is a high-sealing metallic gasket (14) provided between the cylinder (10) and the piston (15) normally to retain the liquid in said cylinder, said gasket being yieldable under shock to allow said piston to slide into said cylinder.

6. A shock absorber according to claim 5, wherein the gasket (14) is of a relatively yieldable metal.

7. A shock absorber according to any one of claims 4 to 6, wherein the piston (15) comprises two longitudinally successive portions (17,18) of different diameters, the portion (17) of larger diameter normally engaging the cylinder (10) and the displacement of the piston into the cylinder under shock creating an annular passage between the cavity of the cylinder (10) and the portion (18) of the piston of smaller diameter, through which passage the liquid contained in the cylinder may flow, whereby to absorb the energy of the shock.

8. A shock absorber according to any one of claims 4 to 7, wherein a secondary chamber (16) is provided in the piston (15) and the piston is so spaced from the cylinder that said secondary chamber is filled with a gas, whereby limited relative displacement of piston and cylinder is permitted by the compressibility of said gas.
